Europäisches Patentamt

**European Patent Office**

Office européen des brevets

(19)

(11) Veröffentlichungsnummer : **0 111 083**
**B1**

(12) **EUROPÄISCHE PATENTSCHRIFT**

(45) Veröffentlichungstag der Patentschrift :
**06.05.87**

(21) Anmeldenummer : **83109934.6**

(22) Anmeldetag : **05.10.83**

(51) Int. Cl.⁴ : **B 61 L 25/02**, B 61 L 27/00,
G 08 G 1/12, B 61 L 3/12

(54) Einrichtung zur Steuerung und Signalübertragung in Förderanlagen.

(30) Priorität : **26.10.82 CH 6227/82**

(43) Veröffentlichungstag der Anmeldung :
**20.06.84 Patentblatt 84/25**

(45) Bekanntmachung des Hinweises auf die Patenterteilung : **06.05.87 Patentblatt 87/19**

(84) Benannte Vertragsstaaten :
**AT BE DE FR GB IT NL SE**

(56) Entgegenhaltungen :
**DE-A- 2 428 130**
**DE-A- 2 611 868**
**DE-A- 3 040 137**
**FR-A- 2 301 055**
**.1980 INTERNATIONAL ZURICH SEMINAR ON DIGI-**
**TAL COMMUNICATIONS, 4.-6. März 1980, Zürich,**
**Seiten C8.1-C8.4, Proceedings IEEE, New York, US. G.**
**F. MÜLLER: "A 30 GHZ FSK-transmission system for**
**automatic train control"**

(73) Patentinhaber : **JD-Technologie AG**
**c/o Gestinor Services AG Chamerstrasse 50**
**CH-6300 Zug (CH)**

(72) Erfinder : **Bögli, Peter, Dipl.El.Ing. ETH**
**Mattenweg 15**
**CH-2557 Studen (CH)**
Erfinder : **Ulrich, Heiz, Dipl.El.Ing. ETH**
**Staatsstrasse 94**
**CH-3044 Säriswil (CH)**

(74) Vertreter : **Monsch, René et al**
**E. BLUM & CO., Patentanwälte Vorderberg 11**
**CH-8044 Zürich (CH)**

## Beschreibung

Die vorliegende Erfindung bezieht sich auf eine Einrichtung zur Steuerung und Signalübertragung in Förderanlagen mit entlang einer Fahrbahn beweglichen Fördermitteln, wobei zwischen den einzelnen Fördermitteln und einer zentralen Anlagensteuerung eine ortsfeste Sende- und Empfangsanlage vorgesehen ist, welche je einem Fahrbahnabschnitt zugeordnete an je einer Steuerstelle vorgesehene Transponder aufweist, von denen jeder über Uebergangsstrecken drahtlos mit einem in seinem Bereiche befindlichen Fördermittel und über Zweidrahtleitungen mit der zentralen Anlagensteuerung in Verbindung steht. Mit Einrichtungen der angegebenen Art werden, beispielsweise in Flurförderanlagen, die Bewegungen der einzelnen Fördermittel auf ihren Fahrbahnen gesteuert und Signale zwischen den Fördermitteln und einer zentralen Anlagensteuerung übermittelt.

Es sind bereits mehrere Arten solcher Anlagen bekannt, die im Prinzip darauf beruhen, dass als Interface zwischen der ortsfesten Steuerung und den mobilen Fördermitteln entlang der Fahrbahn funktionsspezifische Layout-Elemente angeordnet sind. Dazu gehören : Leitfrequenzschleifen zur Festlegung des Streckennetzes ; Start-Stopfrequenzschleifen zur Kontrolle der Fahrt der Fördermittel ; Anwesenheitsdetektorschleifen um die Fördermittel im Layout zu erfassen sowie Bodenblechanordnungen um konstante Informationen auf die Fördermittel zu übertragen. Durch Modulation ihrer Frequenzen werden die Start-Stopschleifen und die Anwesenheitsdetektorschleifen auch paarweise zur bidirektionalen Signalübertragung zwischen den Fördermitteln und der ortsfesten Steuerung genutzt. Nachteilig bei solchen Anlagen ist der erhöhte Aufwand für die Installation und die Elektronik, der sich aus der Vielzahl der benötigten Layout-Elemente ergibt. Hiezu kommt, dass die Anzahl der mit herkömmlichen Bodenblechanordnungen kodierbaren Informationen beschränkt ist und beispielsweise für die Ortsbezeichnung in Anlagen mit ausgedehntem Streckennetz oft nicht ausreicht.

Eine die vorgenannten Nachteile vermeidende Einrichtung ist in der DE-OS Nr. 2 428 130 beschrieben, welche für die Steuerung der Geschwindigkeit eines Fahrzeuges, insbesondere eines Eisenbahnzuges vorgesehen ist. Es handelt sich dabei um eine automatische Zugkontrolle, bei der. Fahrzeuganweisungen von bekannten Steuerstellen entlang dem Schienenstrang auf die Fahrzeuge übertragen werden. Hiezu ist an jeder Steuerstelle ein Transponder angeordnet, der über Uebergangsstrecken drahtlos mit einem in seinem Bereich befindlichen Fördermittel und über eine Leitung mit der zentralen Anlagensteuerung in Verbindung steht. Für den Betrieb als Antwortgerät weist der Transponder einen Codegenerator sowie einen Sender auf, der bei Vorliegen eines Abfragesignales ein im Codegenerator gespeichertes Antwortsignal auf ein Fördermittel überträgt. Ein für die Steuerung von Flurförderanlagen gewichtiger Nachteil besteht darin, dass die Transponder ausschliesslich als Antwortgeräte ausgelegt sind. Sie können deshalb nicht für die bidirektionale Datenübertragung zwischen Fördermittel und zentraler Anlagensteuerung verwendet werden, wie dies bei teilautonomer und zentraler Steuerung einer Förderanlage erforderlich ist.

Weiter enthalten die Proceedings IEEE zum « 1980 International Zurich Seminar on Digital Communications » auf den Seiten C 8.1 bis C 8.4 einen Beitrag mit dem Titel : « A 30 GHz FSK-Transmission System for Automatic Train Control ». Dabei handelt es sich um ein Uebermittlungssystem mit quasi-optischen Uebertragungseigenschaften zwischen ortsfesten und mobilen Sende- und Empfangsanlagen. Hiezu werden zwischen den Fördermitteln und der ortsfesten Anlagensteuerung im mm-Bereich arbeitende bidirektionale und richtungsgetrennte Transceiver verwendet. Diese Einrichtung ist auf die Informationsübertragung ausgelegt und nicht als Lesegerät und passives Antwortgerät im Rahmen eines normalen Frage- und Antwortspieles verwendbar.

Im weiteren ist aus der europäischen Patentanmeldung Nr. 0 053 599 eine Anlage zur induktiven Signalübertragung zwischen einer ortsfesten Sende- und Empfangsstation und einzelnen Fördermitteln bekannt. Dabei bildet eine entlang der Fahrbahn ausgelegte Induktionsschleife eine mit dem Sendeteil der Sende- und Empfangsstation verbundene Sendeschleife, während der Empfangsteil mehrere Empfangseinheiten zum gesonderten Anschluss von Rückmeldeschleifen aufweist, die je einem Fahrbahnabschnitt zugeordnet sind. Für jede der beiden Uebertragungsrichtungen ist also eine spezielle Art von Layout-Element erforderlich, nämlich Sendeschleife und Rückmeldeschleifen. Im weiteren stellt sich das Problem des Uebersprechens, da für die Sendeschleife und die Rückmeldeschleifen die gleichen Frequenzen verwendet werden. Um aufwendige Abschirmungen zu vermeiden, ist man deshalb gezwungen, die Sendeschleife und die Rückmeldeschleifen in aufeinander senkrecht stehenden Ebenen anzuordnen von denen zumindest eine die Längsachse der jeweils der anderen Ebene zugeordneten Schleife enthält. Selbstverständlich müssen auch die Sende- und Empfangsantennen auf den Fördermitteln zueinander und zu den Schleifen entsprechende Lagen einnehmen. Dieser Mangel an Freizügigkeit bei der Anordnung der Layout-Elemente und der Fördermittel ist als besonders nachteilig anzusehen. Auch ist diese induktive Signalübertragungsanlage nicht in der Lage, konstante Informationen, wie sie beispielsweise bei teilautonomen Betrieb zur Funktionsbeeinflussung und Ortsbestimmung im Layout von den Fördermitteln benötigt werden, dezentral zu speichern und zu übertragen. Alle zur Steuerung der Fördermittel notwendigen Informationen müssen deshalb über die volle Länge der Uebertragungskanäle zwischen der Sende- und Empfangsstation und den einzelnen Fördermitteln übertragen werden. Bei grösseren Anlagen stösst man deshalb sehr bald an die Grenze der zur Verfügung stehenden Uebertragungskapazität und dies trotz Richtungstrennung der Uebertragungskanäle.

Ein in der europäischen Patentanmeldung Nr. 0 003 124 beschriebenes System zur Identifizierung von Gegenständen und Personen und zur Informationsübermittlung besteht aus einem Lesegerät und einem am Ort der Informationsablage angebrachten Antwortgerät, das vom Lesegerät ankommende Lesesignale entsprechend dem Informationsinhalt, verzögert, zum Lesegerät zurückstrahlt. Dieses System ist auf besonders störungs- und fälschungssichere Informationsübertragung ausgelegt, jedoch bloss im Rahmen des normalen Frage- und Antwortspieles zwischen Lesegerät und Antwortgerät. Wohl lassen sich mit diesem System konstante Informationen wie z. B. der Ortscode in Förderanlagen, selbsttätig und dezentral auf die Fördermittel übertragen.

Es besteht aber keine Möglichkeit, damit Fördermittel und zentrale Anlagensteuerung signalmässig miteinander zu verbinden.

Hier will die Erfindung Abhilfe schaffen.

Der Erfindung liegt deshalb die Aufgabe zugrunde, eine Einrichtung für Anlagen mit mobilen Objekten, insbesondere für Förderanlagen zu schaffen, die es ermöglicht, mit bloss einer Art von, an Steuerstellen entlang einer Fahrbahn angeordneten Layout-Elementen alle zur Steuerung der einzelnen Fördermittel notwendigen Funktionen auszuführen, und Signale zwischen den Fördermitteln und der ortsfesten Anlagensteuerung bidirektional zu übertragen. Mit besonderem Vorteil soll die Einrichtung in weit verzweigten Anlagen mit einer grossen Anzahl Fördermittel anwendbar sein und sich für teilautonome wie zentrale Steuerung der Fördermittel gleichermassen eignen. Dieses Aufgabe wird mit der in den Kennzeichen des unabhängigen Anspruches beschriebenen Erfindung gelöst. Vorteilhafte Weiterbildungen sind in den abhängigen Ansprüchen angegeben.

Verschiedene mit der Erfindung erzielte Vorteile ergeben sich aus dem Umstande, dass für die notwendigen Steuerfunktionen und die bidirektionale Signalübertragung in Förderanlagen nur eine Art Layout-Element erforderlich ist, nämlich der Transponder. Zunächst wird dadurch der Aufwand für die Installation, den Unterhalt und die Ersatzteilhaltung stark verringert. Von besonderer Bedeutung ist aber die Möglichkeit, gewisse Steuerfunktionen z. B. die Speicherung des Ortscodes und anderer konstanten Informationen sowie deren Uebertragung auf die Fördermittel. von der Anlagensteuerung oder den Gruppensteuereinheiten auf die peripheren Transponder zu delegieren. Die gleiche Systemkonfiguration kann so wahlweise für zentralgesteuerten oder teilautonomen Betrieb verwendet werden. Hiezu ist es lediglich erforderlich, in den Codegeneratoren der entsprechenden Transponder die notwendigen Informationen einzuspeichern. Die erfindungsgemäss gebaute und betriebene Einrichtung besitzt auch den Vorteil, dass die Signalübertragung richtungsgetrennt ist, und im drahtlosen Bereiche zwischen Fördermittel und Transponder induktiv bzw. opto-elektronisch erfolgt. Aufgrund dieses Systemaufbaues ist Uebersprechen wirksam verhindert, so dass diesbezüglich keine aufwendigen und kostspieligen Massnahmen erforderlich sind. Daraus ergibt sich eine weitgehende Freizügigkeit in der Gestaltung des Layouts und in der gegenseitigen Anordnung der induktiven und opto-elektronischen Sender und Empfänger auf den Fördermitteln bzw. den Transpondern. Auch hat sich als besonders vorteilhaft erwiesen, dass bei Verwendung des Transponderprinzipes zum Speichern und Uebertragen konstanter Informationen die bei herkömmlichen Bodenblechanordnungen bekannte Beschränkung der Anzahl Kodiermöglichkeiten entfällt. Dies ist von Bedeutung, wenn z. B. in einem weitverzweigten Streckennetz mit zahlreichen Fördermitteln und Fahrbahnabschnitten die Anzahl der notwendigen Ortsbezeichnungen relativ gross ist. Zusätzlich zu dieser Leistungssteigerung können drei wichtige Funktionen, nämlich die Ortsbezeichnung im Layout (Ortscode), die Erfassung der Fördermittel im Layout (Anwesenheitsmeldung) sowie die bidirektionale Signalübertragung in einer Systemeinheit, nämlich dem Transponder, kombiniert werden, was bis anhin nicht möglich war. Weiter ermöglicht der vorgesehene Manchester-Code im fördermitelresidenten Empfänger eine Taktregeneration, so dass man von den Frequenzschwankungen des Taktgebers im Transponder unabhängig ist. Darüber hinaus reduziert er den Stromverbrauch des Codesenders um ca. 50 %.

Die Erfindung wird nachstehend in ihrer Anwendung bei der Steuerung und Signalübertragung in einer Horizontalförderanlage beschrieben, jedoch ist das hier zugrunde liegende Prinzip allgemein anwendbar. Die lediglich dieses Anwendungsbeispiel der Erfindung darstellende Zeichnung zeigt :

Figur 1 In skizzenhafter Darstellung, einen Teil einer Förderanlage mit der erfindungsgemässen Einrichtung zur Steuerung und Signalübertragung,

Figur 2 eine schematische Darstellung der beiden Betriebsarten des verwendeten Transponders, nämlich in

Figur 2a als Antwortgerät mit unidirektionaler Signalübertragung zur Ortsbestimmung für die Fördermittel und zu deren Erfassung im Layout durch die ortsfeste Steuerung,

Figur 2b als bidirektionaler Signalübertrager zwischen den Fördermitteln und der zentralen Anlagensteuerung und

Figur 3 ein Schaltschema einer möglichen Ausbildung des verwendeten Transponders.

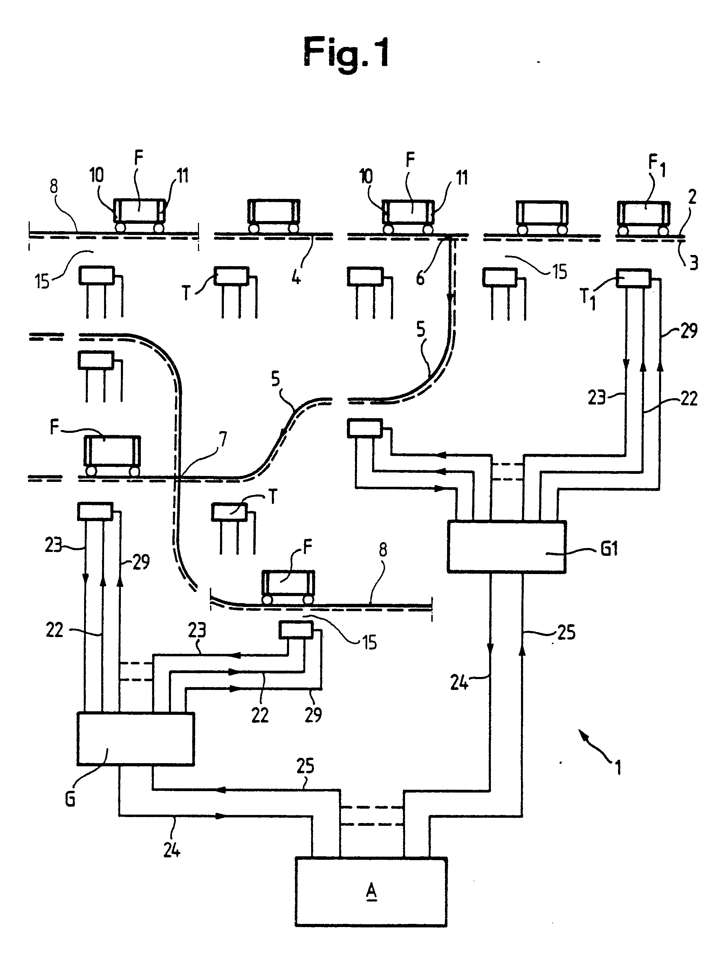

In Fig. 1 sind die das Fördergut aufnehmenden Fördermittel F auf einer gleislosen Fahrbahn 2 entlang einer Leitspur 3 durch Selbstantrieb bewegbar. In bekannter Weise ist das Streckennetz in Fahrbahnabschnitte 8 unterteilt, die aus geraden Abschnitten 4 und/oder gekrümmten Abschnitten 5 bestehen und Einfachverzweigungen 6 oder Mehrfachverzweigungen 7 enthalten. Fahrbahnabschnitte 8, die funktionell oder räumlich eine Einheit bilden, sind über Transponder T an einer gemeinsamen Gruppensteuereinheit G angeschlossen. Dabei ist die Intelligenz zum Betrieb der Förderanlage 1 auf die zentrale Anlagensteuerung A, die Gruppensteuereinheiten G und in einem geringeren Ausmasse, auf die Transponder T verteilt. Im weiteren steht die zentrale Anlagensteuerung A über die Gruppensteuereinheiten G und die Transponder T signalmässig mit allen ortsbeweglichen Fördermitteln F in Verbindung. Diese Verbindungen sind für alle Fördermittel F gleich ausgebildet. Im folgenden wird deshalb am Beispiel des Fördermittels $F_1$ der Aufbau einer solchen Verbindung näher erläutert und dabei die Systemkonfiguration der Fig. 1 zugrunde gelegt.

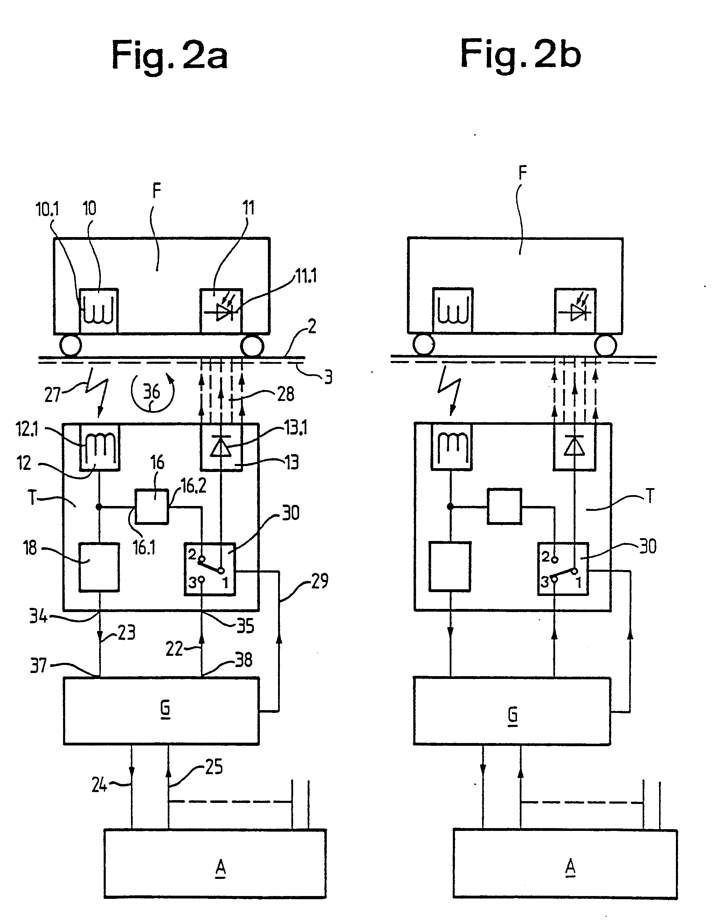

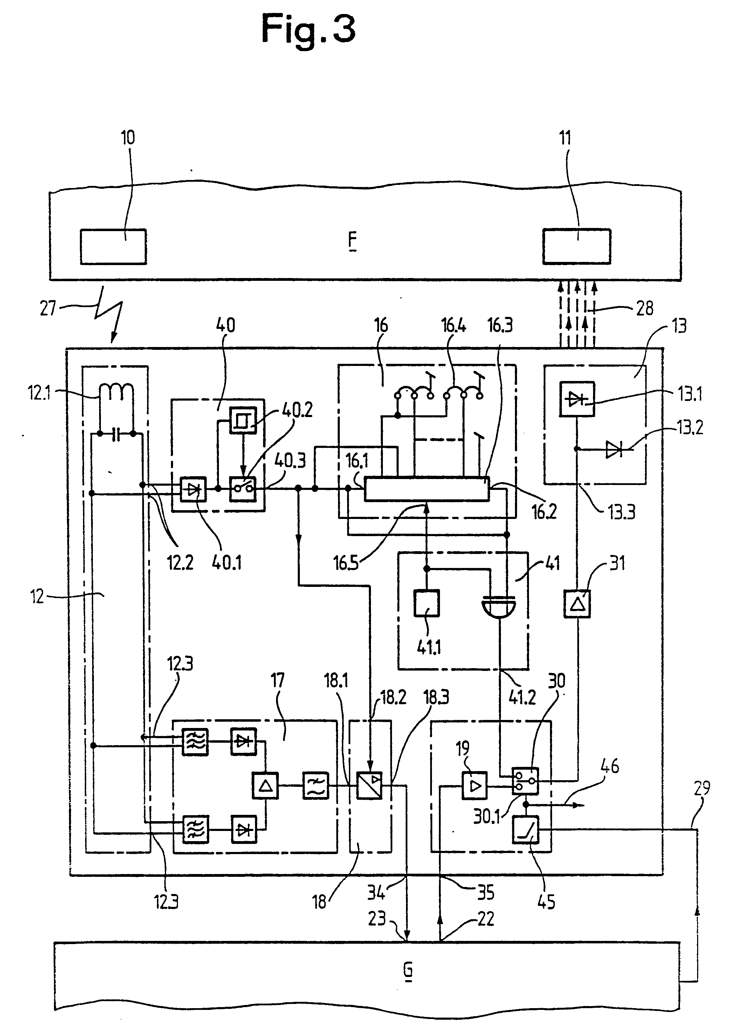

Sowohl auf dem Transponder $T_1$ wie auf dem Fördermittel $F_1$ sind je ein Sender 13 bzw. 10 und ein Empfänger 12 bzw. 11 angeordnet, die in Fig. 3 detailliert dargestellt sind. Da sich das Fördermittel $F_1$ im Bereiche des Transponders $T_1$ befindet, besteht zwischen den zugehörigen Sendern 13, 10 und Empfängern 12, 11 je eine Uebergangsstrecke 27 bzw. 28 wodurch der Transponder $T_1$ und das Fördermittel $F_1$ drahtlos und bidirektional miteinander verbunden sind. Mit 25 und 22 sind Zweidrahtleitungen bezeichnet, über die z. B. Steuerbefehle in Form von Signaltelegrammen von der zentralen Anlagensteuerung A zur Gruppensteuereinheit G und zum Transponder T und über die Uebergangsstrecke 28 weiter zum Fördermittel $F_1$ übertragen werden. Rückmeldetelegramme gelangen in analoger Weise vom Fördermittel $F_1$ zur zentralen Anlagensteuerung A. Hiezu ist der Sender 10 auf dem Fördermittel $F_1$ über die Uebergangsstrecke 27 mit dem Empfänger 12 auf dem Transponder $T_1$ verbunden, dessen Ausgang 34 mittels der Zweidrahtleitung 23 an der Gruppensteuereinheit $G_1$ angeschlossen ist und von da über eine weitere Zweidrahtleitung 24 mit der zentralen Anlagensteuerung A in Verbindung steht. Die von der Gruppensteuereinheit $G_1$ zum Transponder $T_1$ geführte Steuerleitung 29 dient der Betriebsartenwahl des Transponders $T_1$ und, bei bidirektionaler Signalübertragung, auch seiner Speisung. Ihre schaltungstechnische Funktion ist im Zusammenhang mit den Figuren 2 und 3 näher erläutert.

In Fig. 2a enthält der Sender 10 auf dem Fördermittel $F_1$ eine Sendeantenne 10.1, die über die induktive Uebergangsstrecke 27 mit der Empfangsantenne 12.1 auf dem Transponder $T_1$ verbunden ist. Die von der Sendeantenne 10.1 zur Empfangsantenne 12.1 abgestrahlte Trägerwelle kann unmoduliert oder moduliert sein. In beiden Fällen überträgt sie neben Signalen auch elektrische Energie zur Stromversorgung des Transponders $T_1$. In umgekehrter Richtung erstreckt sich die optische Uebergangsstrecke 28 von der IR-Diode 13.1 im Sender 13 zur Photo-Diode 11.1 im Empfänger 11. Der Codegenerator 16 enthält konstante Informationen wie z. B. den Ortscode und ist am Eingang 16.1 mit dem Empfänger 12 und am Ausgang 16.2 über den Multiplexer 30 mit dem Sender 13 verbunden. Der Pfeil 36 stellt den durch das Abfragesignal auf der induktiven Uebergangsstrecke 27 sowie das Antwortsignal auf der optischen Uebergangsstrecke 28 gebildeten Signalpfad dar, der dem reinen Transponderbetrieb entspricht. Der Ausgangsverstärker 18 dient zur Ansteuerung des Zweidrahtleitung 23 die den Ausgang 34 des Transponders $T_1$ mit dem Eingang 37 der Gruppensteuereinheit $G_1$ verbindet. Die mit 29 bezeichnete Steuerleitung ist am Steuereingang 30.1 des Multiplexers 30 angeschlossen. Da sie keine Spannung führt, befindet sich der Multiplexer 30 in seiner Ruhelage, so dass über die Kontakte 1-2 der Ausgang 16.2 des Codegenerators 16 mit dem Sender 13 verbunden ist. Ueber die beiden Zweidrahtleitungen 24 und 25 ist die Gruppensteuereinheit $G_1$ sowie die zentrale Anlagensteuerung A — beide hier nicht weiter dargestellt — bidirektional miteinander verbunden. In Fig. 2b ist der Kanal für die Signalübertragung vom Fördermittel $F_1$ zur Anlagensteuerung A gleich aufgebaut wie in Fig. 2a. Hingegen ist der Multiplexer 30 über die nun Spannung führende Steuerleitung 29 so geschaltet, dass die Verbindung vom Ausgang 16.2 des Codegenerators 16 zum Sender 13 aufgetrennt ist, und statt dessen der Eingang 35 des Transponders $T_1$ über die Kontakte 1-3 des Multiplexers 30 am Sender 13 angeschlossen ist. Es besteht somit ein zusätzlicher Uebertragungskanal von der Gruppensteuereinheit $G_1$ zum Fördermittel $F_1$, der den Multiplexer 30, den Sender 13 und die optische Uebergangsstrecke 28 enthält.

Die in Fig. 3 detailliert gezeigte Schaltung für den Transponder T ist in einem Gehäuse mit den Abmessungen 100×200×20 mm untergebracht was einen problemlosen Einbau in der Fahrbahn 2 ermöglicht. Der Empfänger 12 enthält eine Empfangsantenne 12.1 in den Abmessungen des Gehäuses, zum Empfang von Signalen und elektrischer Energie, die beide über die induktive Uebergangsstrecke 27 empfangen werden. Die am Energieausgang 12.2 des Empfängers 12 angeschlossene Energieaufbereitungsschaltung 40 besteht aus einem Gleichrichter 40.1 und einem Schwellwertschalter 40.2 und versorgt ab ihrem Ausgang 40.3 die einzelnen Schaltkreise mit Speisespannung. Der nachgeschaltete Codegenerator 16 besteht im wesentlichen aus einem als Parallel-Serie-Wandler ausgebildeten Schieberegister 16.3 das mittels der Programmiereingänge 16.4 von aussen programmierbar ist und über die Steuerleitung 16.5 Taktimpulse empfängt. Der Manchester-Coder 41 besitzt einen Taktgenerator 41.1 und ist mit seinem Ausgang 41.2 über die Kontakte 2-3 im Multiplexer 30 und den Stromverstärker 31 am Eingang 13.3 des Senders 13 angeschlossen, in dem die IR-Diode 13.1 sowie ein Anschluss 13.2 für weitere IR-Dioden vorhanden sind. Ein FSK-Demodulator 17 ist eingangsseitig am Datenausgang 12.3 des Empfängers 12 und ausgangsseitig am Verstärkereingang 18.1 des Ausgangsverstärkers 18 angeschlossen, dessen anderer Eingang, nämlich der Strobe-Eingang 18.2 mit dem Ausgang 40.3 der Energieaufbereitungsschaltung 40 in Verbindung steht und dessen Ausgang 18.3 zum Transponderausgang 34 und damit zur Zweidrahtleitung 23 geführt ist. Zwischen der Empfangsantenne 12.1 und dem Transponderausgang 34 bestehen somit zwei Uebertragungskanäle vom Fördermittel F zur Gruppensteuerung G, ein erster über die Energieaufbereitungsanlage 40 und den Strobeeingang 18.2 des Ausgangsverstärkers 18 z. B. für die Uebertragung der Anwesenheitsmeldung, ein zweiter über den FSK-Demodulator 17 und den Verstärkereingang 18.1 des Ausgangsverstärkers 18 für die Datenübertragung. In umgekehrter Richtung besteht zwischen dem Transpondereingang 35 und der IR-Diode 18.1 ein dritter Uebertragungskanal, diesmal von der Gruppensteuerung G zum Fördermittel F. Er ist ebenfalls für Datenübertragung ausgelegt und enthält den Eingangsverstärker 19, den Multiplexer 30 in Stellung 1-3 sowie den Stromverstärker 31. Zusammen mit dem vorgenannten Datenkanal über den FSK-Demodulator 17 ergibt sich daraus eine bidirektionale und richtungsgetrennte Datenverbindung zwischen den Fördermitteln F und der Gruppensteuerung G. Die Steuerleitung 29 ist über den Schwellwertschalter 45 geführt und von da am Steuereingang 30.1 des Multiplexers 30 und an der Speiseleistung 46 für die Stromversorgung des Transponders T angeschlossen. Die hier nicht weiter dargestellten Elemente auf den Fördermitteln F und in der Gruppensteuerung G sind so ausgebildet, dass sie mit dem Transponder T zusammenarbeiten können. Dazu gehören auf dem Fördermittel F ein Sender 10 zur Erzeugung des die induktive Uebergangsstrecke 27 bildenden elektromagnetischen Feldes, eine Sendeantenne 10.1 gespiesen aus einer Stromquelle und fixem oder FSK-modulierbarem Oszillator. Ferner ein IR-Empfänger mit Photo-Diode 11.1, geregeltem Vorverstärker, ein Manchester-Decoder und ein Bit-Takt-Regenerator zur Taktung eines Datenempfängers. Die Gruppensteuerung G enthält Leitungstreiber und -empfänger passend zum Transponder T, einen Manchester-Coder, Datensender und -empfänger sowie eine schaltbare, positive Speisespannung zum Anschluss an die Steuerleitung 29.

Zur Erläuterung der Funktionsweise der erfindungsgemässen Einrichtung sei auf die Figuren 1, 2 und 3 hingewiesen und von den Funktionen ausgegangen, wie sie für den Betrieb einer Förderanlage typisch sind.

Wenn die Steuerleitung 29 für die Betriebsartenwahl des Transponder T keine Spannung führt, befindet sich der Multiplexer 30 in seiner Ruhestellung 1-2. Der Ausgang des Codegenerators 16 ist deshalb über die Kontakte 1 und 2 des Multiplexers 30 mit dem Eingang 13.3 des Senders 13 verbunden. Der Transponder T funktioniert in diesem Falle als Antwortgerät mit gleichzeitiger Signalübertragung von einem Fördermittel F zu einer Gruppensteuereinheit G. Hiezu wird durch eine unmodulierte oder modulierte Trägerfrequenz im kHz-Bereich in der Empfangsantenne 12.1 genügend Spannung induziert, um den in CMOS-Technik aufgebauten Codegenerator 16, den Manchester-Code 41, den Stromverstärker 31 sowie den Ausgangsverstärker 18 zu speisen. Dabei stellt die Energieaufbereitungsschaltung 40 sicher, dass die Stromversorgung erst freigegeben wird, wenn sie den Stromverbrauch mit Sicherheit decken kann. Im Codegenerator 16, der einen als Schieberegister 16.1 ausgebildeten Parallel-Serie-Wandler enthält, wird ein gespeichertes 8-Bit-Wort in herkömmlicher Weise, in einen seriellen asynchronen Bitstrom umgeformt, bestehend aus Startbit, acht Datenbits, Paritybit und Stoppbit. Der Manchestercoder 41 reduziert den Stromverbrauch des Codegenerators um 50 % und ermöglicht im fördermittelresidenten Empfänger 11 eine einfache Taktregeneration. Die so vorbereitete Information wird im Stromverstärker 31 verstärkt, in der IR-Diode 13.1 in Lichtimpulse umgewandelt und über die optische Uebergangsstrecke 28 bitweise auf die Photo-Diode 11.1 auf dem Fördermittel F übertragen. Im Codegenerator 16 sind konstante Informationen für die Steuerung der Fördermittel F gespeichert. Dazu gehört in erster Linie der Ortscode, der dem Fördermittel F seinen Standort im Layout bekannt gibt, und ihm damit ermöglicht, sein Automatenzustand entsprechend zu verändern. Der Transponder T funktioniert also als Antwortgerät mit elektromagnetischer Erregung und optischer Code-Uebermittlung. Abfragesignal und Antwortsignal werden als elektro-magnetische Induktion bzw. als IR-Impulstelegram übertragen. Da es sich bei der im Codegenerator 16 gespeicherten Information vornehmlich um den Ortscode handelt, erfüllt der Transponder T in dieser Betriebsart als erste Funktion jene des Ortscodegebers. Zusätzlich bietet diese Betriebsart aber auch die Möglichkeit, gleichzeitig mit der Erzeugung des Ortscodes — als zweite Funktion — Signale von einem Fördermittel F zu einer Gruppensteuerung G zu übertragen. In der vorliegenden Anwendung in einer Förderanlage handelt es sich bei diesen Signalen vornehmlich um die Anwesenheitsmeldung und um allgemeine Daten. Für die Uebertragung der Anwesenheitsmeldung geht man von der Erkenntnis aus, dass für die Induktion einer elektrischen Spannung in der Empfangsantenne 12.1 des Transponders T nur eine Sendeantenne 10.1 auf einem Fördermittel F in Frage kommt. Da der Wagensender im Dauerbetrieb arbeitet, also fortlaufend eine Trägerfrequenz abstrahlt solange die Förderanlage in Betrieb ist, wird die Energieaufbereitungsschaltung 40 immer dann mit Spannung versorgt, wenn ein Fördermittel F im Bereiche eines Transponders T anwesend ist. Die Speisespannung am Ausgang 40.3 der Energieaufbereitungsschaltung 50. erregt deshalb nicht nur den Codegenerator 16 sondern sie stellt auch ein Anwesenheitssignal für ein Fördermittel F dar. Dieses Anwesenheitssignal wird aber nur dann als AW-Meldung zur Gruppensteuereinheit G weitergeleitet, wenn die vom Fördermittel F abgestrahlte Trägerwelle unmoduliert ist. In diesem Falle liegen nämlich keine Daten am Dateneingang 18.1 des Ausgangsverstärkers 18, so dass die Spannung an seinem Strobeeingang 18.2 auf den Transponderausgang 34 durchgeschaltet wird, um über die Zweidrahtleitung 23 als AW-Meldung zur Gruppensteuereinheit G übermittelt zu werden. Mit einer vom Fördermittel F empfangenen unmodulierten Trägerwelle wird der Codegenerator 16 erregt und gleichzeitig eine AW-Meldung zur Gruppensteuereinheit G übertragen. Der Transponder T funktioniert also gleichzeitig als Ortscodegeber und als Anwesenheitsdetektor. Dabei werden die elektrische Energie zur Transponderspeisung, das Abfragesignal und die AW-Meldung gemeinsam als unmodulierte Trägerwelle über die induktive Uebergangsstrecke 27 vom Fördermittel F zum Transponder T übertragen. Ist die vom Transponder T empfangene Trägerwelle aber moduliert, will man Daten vom Fördermittel F zur Gruppensteuereinheit G übertragen. Im Demodulator 17 demodulierte Daten stehen deshalb am Dateneingang 18.1 an, und da derselbe gegenüber dem Strobeeingang 18.2 dominant ist, werden diesmal anstelle der AW-Meldung Datensignale zur Gruppensteuereinheit G weitergeleitet. Beim Empfang einer modulierten Trägerwelle werden also gleichzeitig der Codegenerator 16 erregt und Daten zur Gruppensteuereinheit G übertragen. Der Transponder T funktioniert in diesem Falle gleichzeitig als Ortscodegeber und als unidirektionaler Datenübertrager. Dabei werden die elektrische Energie zur Transponderspeisung, das Abfragesignal und die Daten gemeinsam als modulierte Trägerwelle über die induktive Uebergangsstrecke 27 vom Fördermittel F zum Transponder T übertragen. Wenn die Steuerleitung 29 für die Betriebsartenwahl des Transponders T Spannung führt, ist der Multiplexer 30 in seine Arbeitsstellung 1-3 geschaltet und die Verbindung über die Kontakte 1 und 2 unterbrochen. Der Codegenerator 16 ist deshalb vom Sender 13 abgetrennt und dadurch die Funktion als Antwortgerät verunmöglicht. Hingegen ist der Eingang 35 über die Kontakte 3 und 1 des Multiplexers 30 auf den Sender 13 durchgeschaltet. Ueber die Zweidrahtleitung 22 empfangene Daten werden im Eingangsverstärker 19 und im Stromverstärker 31 spannungsmässig bzw. strommässig verstärkt und in der nachgeschalteten IR-Diode 13.1 zur optischen Uebertragung in Lichtimpulse umgeformt. Ueber die Zweidrahtleitung 22, den Transponder T und die optische Uebergangsstrecke 28 besteht somit ein unidirektionaler Datenkanal von der Gruppensteuereinheit G zum Fördermittel F. Unabhängig davon besteht in umgekehrter Richtung der vorgenannte Datenkanal über die induktive Uebergangsstrecke 27, den Demodulator 17, und die Zweidrahtleitung 23 vom Fördermittel F zur Gruppensteuereinheit G. Da beide Kanäle einzeln oder in Kombination aktiv sein können, besitzt jede seine eigene Stromversorgung die erste in bekannter Weise durch elektro-magnetische Induktion in der Empfangsantenne 12.1 der zweite durch den Abgang 46 aus der Steuerspannung des Multiplexers 30. In dieser Betriebsart besitzt die erfindungsgemässe Einrichtung für jeden eingesetzten Transponder T einen bidirektionalen und richtungsgetrennten Datenkanal, für die Verbindung der Fördermittel F mit den zugehörigen Gruppensteuereinheiten G.

**Patentansprüche**

1. Einrichtung zur Steuerung und Signalübertragung in Förderanlagen mit entlang einer Fahrbahn (2) beweglichen Fördermitteln (F), wobei zwischen den einzelnen Fördermitteln (F) und einer zentralen Anlagensteuerung (A) eine ortsfeste Sende- und Empfangsanlage vorgesehen ist, welche je einem Fahrbahnabschnitt (8) zugeordnete an je einer Steuerstelle (15) vorgesehene Transponder (T) aufweist, von denen jeder über Uebergangsstrecken (27, 28) drahtlos mit einem in seinem Bereiche befindlichen Fördermittel (F) und über Zweidrahtleitungen (22, 23, 24, 25) mit der zentralen Anlagensteuerung (A) in Verbindung steht, dadurch gekennzeichnet, dass jeder Transponder (T) einen über eine Steuerleitung (29) betätigbaren Multiplexer (30) aufweist und von diesem wahlweise als von einem Fördermittel (F) abzufragendes und der gleichzeitigen Signalübertragung zur zentralen Anlagensteuerung (A) dienendes Antwortgerät oder als bidirektionaler Signalübertrager zwischen einem Fördermittel (F) und der zentralen Anlagensteuerung (A) schaltbar ist ; für den Betrieb als Antwortgerät mit Signalübertragung mindestens einen Codegenerator (16), einen Stromverstärker (31) sowie einen Sender (13) zur Uebertragung eines im Codegenerator (16) gespeicherten Antwortsignales auf ein Fördermittel (F) aufweist und für die bidirektionale Signalübertragung einen Demodulator (17), einen Ausgangsverstärker (18) und einen Eingangsverstärker (19) besitzt.

2. Einrichtung nach Anspruch 1, dadurch gekennzeichnet, dass Gruppensteuereinheiten (G) vorgesehen sind, die je über Zweidrahtleitungen (22, 23) mit einer Gruppe Transponder (T) und über die Zweidrahtleitungen (24, 25) mit der zentralen Anlagensteuerung (A) verbunden sind.

3. Einrichtung nach den Ansprüchen 1 und 2, dadurch gekennzeichnet, dass das Abfragesignal als modulierte oder unmodulierte elektro-magnetische Induktion von der Sendeantenne (10.1) auf dem Fördermittel (F) zur Empfangsantenne (12.1) auf dem Transponder (T) übertragen wird.

4. Einrichtung nach den Ansprüchen 1 und 2, dadurch gekennzeichnet, dass das Antwortsignal mittels IR-Licht als kodiertes Impulstelegramm vom Sender (13) auf dem Transponder (T) zum Empfänger (11) auf dem Fördermittel (F) übertragen wird.

5. Einrichtung nach den Ansprüchen 1 und 2, dadurch gekennzeichnet, dass ein als unmodulierte elektro-magnetische Induktion von der Empfangsantenne (12.1) auf dem Transponder (T) empfangenes Abfragesignal über den Strobeeingang (18.2) des Ausgangsverstärkers (18) und die Zweidrahtleitung (23) als Anwesenheitsmeldung zur Lagebestimmung eines Fördermittels (F) an die Gruppensteuereinheit (G) weitergeleitet ist.

6. Einrichtung nach den Ansprüchen 1 und 2, dadurch gekennzeichnet, dass ein als modulierte elektro-magnetische Induktion von der Empfangsantenne (12.1) auf dem Transponder (T) empfangenes Informationssignal auch als Abfragesignal auf den Codegenerator (16) geführt ist.

7. Einrichtung nach den Ansprüchen 1 und 2, dadurch gekennzeichnet, dass für die Erzeugung und Uebertragung des Antwortsignales die elektrische Energie mittels modulierter oder unmodulierter elektro-magnetischer Induktion von der Sendeantenne (10.1) auf dem Fördermittel (F) zur Empfangsantenne (12.1) auf dem Transponder (T) übertragen wird.

8. Einrichtung nach den Ansprüchen 1 und 2, dadurch gekennzeichnet, dass auf der Uebergangsstrecke (27) vom Fördermittel (F) zum Transponder (T) das Abfragesignal und die elektrische Energie gemeinsam mit der Anwesenheitsmeldung als unmodulierte elektro-magnetische Induktion übertragen werden.

9. Einrichtung nach den Ansprüchen 1 und 2, dadurch gekennzeichnet, dass auf der Uebergangsstrecke (27) vom Fördermittel (F) zum Transponder (T) das Abfragesignal und die elektrische Energie gemeinsam mit den Informationssignalen als modulierte elektro-magnetische Induktion übertragen werden.

10. Einrichtung nach den Ansprüchen 1 und 2, dadurch gekennzeichnet, dass ein im Codegenerator (16) gespeichertes Antwortsignal den Ortscode des dem betreffenden Transponder (T) zugeordneten Fahrbahnabschnittes (8) darstellt.

11. Einrichtung nach den Ansprüchen 1 und 2, dadurch gekennzeichnet, dass mindestens ein, im Codegenerator (16) gespeichertes Antwortsignal mit einer die verschiedenen Fördermittel (F) bezeichnenden Kennung versehen ist.

12. Einrichtung nach den Ansprüchen 1 und 2, dadurch gekennzeichnet, dass mindestens ein, zwischen Fördermittel (F) und zentraler Anlagensteuerung (A) übertragenes Informationssignal mit einer, die verschiedenen Fördermittel (F) bezeichnenden Kennung versehen ist.

13. Einrichtung nach den Ansprüchen 1 und 2, dadurch gekennzeichnet, dass für die bidirektionale Uebertragung von Informationssignalen die Stromversorgung des Transponders (T) über die den Multiplexer (30) ansteuernde Steuerleitung (29) gewährleistet ist.

14. Einrichtung nach den Ansprüchen 1 und 2, dadurch gekennzeichnet, dass für die Modulation, der von der Sendeantenne (10.1) auf die Empfangsantenne (12.1) übertragenen elektromagnetischen Induktion das Frequenzsprungverfahren vorgesehen ist.

15. Einrichtung nach den Ansprüchen 1 und 2, dadurch gekennzeichnet, dass für die Kodierung der von der zentralen Anlagensteuerung (A) auf ein Fördermittel (F) übertragenen Information, der Manchester-Code vorgesehen ist.

16. Einrichtung nach den Ansprüchen 1 und 2, dadurch gekennzeichnet, dass für die, über Transponder (T) den einzelnen Gruppensteuereinheiten (G) zugeordneten Bereiche der Förderanlage unterschiedliche Betriebsarten frei wählbar sind, beispielsweise Normalbetrieb sowie Revisionsbetrieb zur Diagnose und Fehlererkennung.

17. Einrichtung nach den Ansprüchen 1 und 2, dadurch gekennzeichnet, dass die Störungs- und Fälschungssicherheit der Signalübertragung durch Diversity-Verfahren und Fehlererkennung mittels Parity gewährleistet ist.

**Claims**

1. Apparatus for controlling and for signal transmission in conveyor installations containing conveyor means (F) movable along a track system (2) and including a stationary transmitting and receiving installation located between the individual conveyor means (F) and a central system control (1) having transponders (T) each arranged at one respective control location (15) and allocated to one respective track system section (8), each transponder (T) being in wireless communication via transmission links (27, 28) with one conveyor means (F) located in its area and via two wire lines (22, 23, 24, 25) in communication with the central system control, characterized in that each transponder (T) comprises a multiplexer (30) operatable via a control line (29) and is selectively switchable by said multiplexer (30) as a responder interrogatable by one conveyor means (F) and serving for a simultanous signal transmission to the central system control (A) or as a bidirectional signal transmitter between one conveyor means (F) and the central system control (A) ; comprises for the operation as responder including signal transmission at least one code generator (16), a current amplifier (31) as well as a transmitter (13) for the transmission to one conveyor means (F) of a response signal stored in the code generator (16), and comprises for the bidirectional signal transmission a demodulator (17), an output amplifier (18) and an input amplifier (19).

2. Apparatus of claim 1, characterized in that group control units (G) are provided, each connected via two-wire lines (22, 23) to a group of transponders (T) and said two-wire lines (24, 25) to the central system control (A).

3. Apparatus of claim 1 and 2, characterized in that the interrogation signal being transmitted from the transmitting antenna (10.1) on the conveyor means (F) to the receiving antenna (12.1) on the transponder (T) is transmitted as modulated or unmodulated electro-magnetic induction.

4. Apparatus of claim 1 and 2, characterized in that the response signal being transmitted via IR-light as coded pulse telegram from the transmitter (13) on the transponder (T) to the receiver (11) on the conveyor means (F).

5. Apparatus of claim 1 and 2, characterized in that a interrogation signal received by the receiving antenna (12.1) on the transponder (T) as an unmodulated induction is transmitted to the group control unit (G) via the strobe input (18.2) of the output amplifier (18) and the two-wire line (23) as presence indication signal for determining the position of a conveyor means (F).

6. Apparatus of claims 1 and 2, characterized in that an information signal received by the receiving antenna (12.1) on the transponder (T) as modulated electromagnetic induction is conveyed also as interrogation signal on the code generator (16).

7. Apparatus of claims 1 and 2, characterized in that in order to generate and transmit the response signal the electrical energy is transmitted via modulated or unmodulated electro-magnetic induction from the transmitting antenna (10.1) on the conveyor means (F) to the receiving antenna (12.1) on the transponder (T).

8. Apparatus of claims 1 and 2, characterized in that the interrogation signal and the electrical energy being conjointly transmitted with the presence indication signal as unmodulated electro-magnetic induction on the transmission path (27) from the conveyor means (F) to the transponder (T).

9. Apparatus of claims 1 and 2, characterized in that the interrogation signal and the electrical energy being conjointly transmitted with the information signals as unmodulated electro-magnetic induction on the transmission path (27) from the conveyor means (F) to the transponder (T).

10. Apparatus of claims 1 and 2, characterized in that a response signal stored in the code generator constitutes the location code of the travel path section with which the respective transponder (T) is associated.

11. Apparatus of claims 1 and 2, characterized in that at least one response signal stored in the code generator (16) comprises an identifying signal for identifying the individual conveyor means (F).

12. Apparatus of claims 1 and 2, characterized in that at least one information signal transmitted between conveyor means (F) and central system control (A) comprises an identifying signal for identifying the individual conveyor means (F).

13. Apparatus of claims 1 and 2, characterized in that the current supply of the transponder (T) for the bidirectional transmission of information signals is ensured by the control line (29) controlling the multiplexer (30).

14. Apparatus of claims 1 and 2, characterized in that the frequency shift keying is provided for the modulation of the electro-magnetic induction transmitted from the transmitting antenna (10.1) to the receiving antenna (12.1).

15. Apparatus of claims 1 and 2, characterized in that the Manchester code is applied for the coding of the information from the central system control (A) to the conveyor means (F).

16. Apparatus of claims 1 and 2, characterized in that different operational modes are freely selectable for the travel path sections of the conveyor installation allocated via transponder (T) to the individual group control units (G), such as standard mode as well as inspection mode for diagnosis and error detection.

17. Apparatus of claims 1 and 2, characterized in that the protection against malfunction and falsification of the signal transmisstion is ensured by diversity methods and error detection by means of parity.

**Revendications**

1. Dispositif de commande et de transmission de signaux pour des installations de transport comportant des dispositifs de transport (F) déplaçables le long d'une voie de déplacement (2), dans lequel il est prévu, entre les différents dispositifs de transport (F) et un dispositif central (A) de commande de l'installation, une installation fixe d'émission et de réception qui comporte des transpondeurs (T) associés chacun à un tronçon (8) de la voie de déplacement et prévus respectivement en un emplacement de commande (15), chacun d'eux étant relié sans fil, par l'intermédiaire de voies de transmission (27, 28), à un dispositif de transport (F) situé dans son voisinage et, par l'intermédiaire de lignes bifilaires (22, 23, 24, 25), au dispositif central (A) de commande de l'installation, caractérisé en ce que chaque transpondeur (T) comporte un multiplexeur (30) pouvant être activé par l'intermédiaire d'une ligne de commande (29) et peut être mis en circuit par ce dernier, sélectivement en tant qu'appareil répondeur devant être interrogé par un dispositif de transport (F) et utilisé pour la transmission simultanée de signaux au dispositif central (A) de commande de l'installation, ou en tant que transmetteur bidirectionnel de signaux entre un dispositif de transport (F) et le dispositif central (A) de commande de l'installation, et comporte, pour le fonctionnement en tant qu'appareil répondeur avec transmission de signaux, au moins un générateur de codes (16), un amplificateur de courant (31) ainsi qu'un émetteur (13) pour la transmission d'un signal de réponse mémorisé dans le générateur de codes (16) à un dispositif de transport (F), et possède, pour la transmission bidirectionnelle des signaux, un démodulateur (17), un amplificateur de sortie (18) et un amplificateur d'entrée (19).

2. Dispositif selon la revendication 1, caractérisé en ce qu'il est prévu des unités de commande de groupes (G), qui sont reliées respectivement, par l'intermédiaire de lignes bifilaires (22, 23), à un groupe de transpondeurs (T) et, par l'intermédiaire des lignes bifilaires (24, 25), au dispositif central (A) de commande de l'installation.

3. Dispositif selon les revendications 1 et 2, caractérisé en ce que le signal d'interrogation est transmis, sous la forme d'une induction électromagnétique modulée ou non modulée, par l'antenne émettrice (10.1) située sur le dispositif de transport (F) à l'antenne réceptrice (12.1) située sur le transpondeur (T).

4. Dispositif selon les revendications 1 et 2, caractérisé en ce que le signal de réponse est transmis, au moyen d'un rayonnement infrarouge sous la forme d'un télégramme codé d'impulsions, de l'émetteur (13) situé sur le transpondeur (T) au récepteur (11) situé sur le dispositif de transport (F).

5. Dispositif selon les revendications 1 et 2, caractérisé en ce qu'un signal d'interrogation, reçu sous la forme d'une induction électromagnétique non modulée par l'antenne réceptrice (12.1) située sur le transpondeur (T), est retransmis, en tant que signalisateur de présence pour la détermination de la position d'un dispositif de transport (F), à l'unité de commande de groupes (G), par l'intermédiaire de l'entrée d'échantillonnage (18.2) de l'amplificateur de sortie (18) et de la ligne bifilaire (23).

6. Dispositif selon les revendications 1 et 2, caractérisé en ce qu'un signal d'information reçu, sous la forme d'une induction électromagnétique modulée, par l'antenne réceptrice (12.1) située sur le transpondeur (T), est également envoyé en tant que signal d'interrogation au générateur de codes (16).

7. Dispositif selon les revendications 1 et 2, caractérisé en ce que la génération et la transmission du signal de réponse, l'énergie électrique est transmise, au moyen d'une induction électromagnétique modulée ou non modulée, par l'antenne émettrice (10.1) située sur le dispositif de transport (F) à l'antenne réceptrice (12.1) située sur le transpondeur (T).

8. Dispositif selon les revendications 1 et 2, caractérisé en ce que le signal d'interrogation et l'énergie électrique sont transmis en commun avec la signalisation de présence, sous la forme d'une induction électromagnétique non modulée, sur la voie de transmission (27) allant du dispositif de transport (F) au transpondeur (T).

9. Dispositif selon les revendications 1 et 2, caractérisé en ce que le signal d'interrogation et l'énergie électrique sont transmis en commun avec les signaux d'information, sous la forme d'une induction électromagnétique modulée, sur la voie de transmission (27) allant du dispositif de transport (F) au transpondeur (T).

10. Dispositif selon les revendications 1 et 2, caractérisé en ce qu'un signal de réponse mémorisé dans le générateur de codes (16) représente le code de lieu du tronçon (8) de la voie de déplacement, associé au transpondeur (T) considéré.

11. Dispositif selon les revendications 1 et 2, caractérisé en ce qu'au moins un signal de réponse mémorisé dans le générateur de codes (16) est muni d'un indicatif désignant les différents dispositifs de transport (F).

12. Dispositif selon les revendications 1 et 2, caractérisé en ce qu'au moins un signal d'information transmis entre les dispositifs de transport (F) et le dispositif central (A) de commande de l'installation, est muni d'un indicatif désignant les différents dispositifs de transport (F).

13. Dispositif selon les revendications 1 et 2, caractérisé en ce que, pour la transmission bidirectionnelle des signaux d'information, l'alimentation en courant du transpondeur (T) est réalisée par l'intermédiaire de la ligne de commande (29) pilotant le multiplexeur (30).

14. Dispositif selon les revendications 1 et 2, caractérisé en ce que le procédé à saut de fréquence est utilisé pour la modulation de l'induction électromagnétique transmise par l'antenne émettrice (10.1) à l'antenne réceptrice (12.1).

15. Dispositif selon les revendications 1 et 2, caractérisé en ce que le code Manchester utilisé pour le codage de l'information transmise par le dispositif central (A) de commande de l'installation à un dispositif de transport (F).

16. Dispositif selon les revendications 1 et 2, caractérisé en ce que, pour les zones de l'installation de transport, associées par l'intermédiaire de transpondeurs (T) aux différentes unités de commande de groupes (G), différents modes de fonctionnement peuvent être choisis librement, par exemple un fonctionnement normal ainsi qu'un fonctionnement de révision pour un diagnostic et une identification d'erreurs.

17. Dispositif selon les revendications 1 et 2, caractérisé en ce que la sécurité contre les perturbations et les erreurs de la transmission de signaux est assurée par le procédé de diversité et l'identification d'erreurs au moyen de la parité.

**Fig.1**

0 111 083

# Fig. 2a

# Fig. 2b

0 1 1 1 0 8 3

Fig.3